# EUROPÄISCHE PATENTANMELDUNG

(11) **EP 2 696 313 A1**
(43) Veröffentlichungstag der Anmeldung: **12.02.2014**
(21) Anmeldenummer: 13179753.2
(22) Anmeldetag: 08.08.2013
(51) Int. Cl.: G06Q 10/00

(54) **Verfahren zur Planung und Steuerung von Wartungs- und Instandsetzungsarbeiten, Computerprogrammprodukt, Digitales Speichermedium, Endgerät, System zur Planung und Steuerung sowie Kommunikationsschnittstelle**

(30) Priorität: 08.08.2012 DE 102012214106; 08.08.2012 US 201261680881 P
(71) Anmelder: Fraunhofer-Gesellschaft zur Förderung der angewandten Forschung e.V., 80686 München (DE); Airberlin Technik GmbH, 13627 Berlin (DE)
(72) Erfinder: Moos, Frank, 13627 Berlin (DE); Knothe, Thomas, 12526 Berlin (DE)
(74) Vertreter: Eisenführ Speiser

(57) **Zusammenfassung**

Die Erfindung betrifft ein Verfahren 3000, 4000 zur Planung und Steuerung von Wartungs- und Instandsetzungsarbeiten an einem Fahrzeug eines Verkehrssystems mit einem Netzwerk umfassend folgende Netzwerkkomponenten:
- wenigstens ein Fahrzeug 202,
- ein dem wenigstens einen Fahrzeug 202 zugeordnetes Bordbuch 202E, 549,
- Zubehör 203, 204, 541, 543, 546,
- wenigstens ein erstes dem Zubehör zugeordnetes Endgerät 203E, 204E, 542, 544, 547,
- wenigstens ein zweites dem Zubehör zugeordnetes Endgerät 203E, 204E, 542, 544, 547,

umfassend die Schritte:
e) Senden von Zubehörbedarf definierenden Daten von dem Bordbuch 202E, 549 in das Netzwerk,
f) Empfangen der Daten an dem ersten und dem zweiten Endgerät 203E, 204E, 542, 544, 547,
g) bidirektionale Kommunikation der Netzwerkkomponenten untereinander,
h) Zuweisung der Wartungs- und Instandsetzungsarbeiten,
i) Rückmeldung nach Durchführung der Wartungs- und Instandsetzungsarbeiten,

wobei die Zuweisung und die Rückmeldung durch wenigstens eine der Netzwerkkomponenten durchgeführt werden.

## Beschreibung

Die Erfindung betrifft ein Verfahren gemäß dem Oberbegriff des Anspruchs 1. Die Erfindung betrifft auch ein Computerprogrammprodukt gemäß dem Oberbegriff des Anspruchs 9. Weiter betrifft die Erfindung ein digitales Speichermedium und ein Endgerät zum Anbringen an Zubehör eines Verkehrssystems. Die Erfindung betrifft auch ein System gemäß dem Oberbegriff des Anspruchs 13. Ferner betrifft die Erfindung eine Kommunikationsschnittstelle zum Austausch von Daten.

Fahrzeuge in einem Verkehrssystem unterliegen aufgrund hoher Belastungen sowie teilweise strengen behördlichen Anforderungen einem festgelegten Wartungs- und Instandsetzungsplan. Ein solcher Wartungs- und Instandsetzungsplan umfasst üblicherweise die zu erledigenden Wartungs- und Instandsetzungsarbeiten wie beispielsweise die Inspektion, Wartung, Instandsetzung und Modifikation der Fahrzeuge. Die Planung und Steuerung solcher Wartungs- und Instandsetzungsarbeiten für Verkehrssysteme mit vielen einzelnen sich zwischen mehreren Wartungsstandorten bewegenden Fahrzeugen, wie beispielsweise Flugzeugen oder Eisenbahnen ist sehr aufwendig.

Solche Wartungs- und Instandsetzungsarbeiten umfassen viele verschiedene Arbeiten, die in ihrer Art und Dauer variieren können. Dabei können kurze Reparaturaufgaben bis hin zur kompletten Zerlegung und Wiederzusammenbau des vollständigen Fahrzeugs berücksichtigt werden sowie geplante und ungeplante Wartungs- und Instandsetzungsarbeiten. Zudem können die Wartungs- und Instandsetzungsarbeiten teilweise behördliche Auflagen erfüllen. Bei Flugzeugen, insbesondere Verkehrsflugzeugen, werden beispielsweise sämtliche Wartungs- und Instandsetzungsarbeiten nach einem durch die Hersteller vorgegebenen Instandsetzungsprogramm auf das Nutzungsprofil angepasst und anschließend durch eine Behörde geprüft und genehmigt. Es finden verschiedene sogenannte Letter-Checks statt, wie beispielsweise ein sogenannter D-Check, der einer Grundüberholung gleichgestellt ist und intensive, lange und teure Wartungs- und Instandsetzungsarbeiten mit sich trägt. Ein solcher D-Check wird je nach Flugzeugtyp etwa nach mehreren tausend Flugstunden durchgeführt.

Bei Hochgeschwindigkeitszügen wie beispielsweise dem ICE sind aufgrund der hohen Geschwindigkeiten und somit hohen Belastungen kurze Inspektionsintervalle erforderlich. Nach etwa 13.000 Kilometern Laufleistung muss hier eine sogenannte Sicherheitsinspektion durchgeführt werden. Jeder Ausfall der Fahrzeuge durch derartige Untersuchungen bringt einen nicht unerheblichen Kostenaufwand mit sich. Bei häufig erforderlichen und/oder intensiven Untersuchungen ist es daher notwendig, diese Untersuchungen in möglichst kurzer Zeit durchzuführen. Es sind geplante und ungeplante Wartungs- und Instandsetzungsarbeiten auf entsprechendes Personal zuzuordnen und die Bereitstellung von Ersatzteilen und den erforderlichen Werkzeugen ist sicherzustellen.

Neben solchen Wartungs- und Instandsetzungsarbeiten muss die Verfügbarkeit der Fahrzeuge eines Verkehrssystems über eine festgelegte Einsatzplanung geplant werden. Die Wartungs- und Instandsetzungsarbeiten sind mit der Einsatzplanung der Fahrzeuge in dem entsprechenden Verkehrssystem zu synchronisieren. So ist grundsätzlich neben den Wartungs- und Instandhaltungsarbeiten --die auch als Maintenance, Repair and Overhaul - MRO abgekürzt werden-- die Verfügbarkeit von Verkehrssystemen durch inadäquate Planungs- und Steuerungsprozesse verringert. Geplante und ungeplante MRO-Aufgaben sind auf Mechanikern zuzuordnen und die Bereitstellung von mitunter sehr teuren Ersatzteilen und erforderlichen Werkzeugen ist sicherzustellen. Weiterhin sind die MRO-Arbeiten mit der Einsatzplanung der Verkehrssysteme zu synchronisieren.

Die Steuerung der Wartungs- und Instandsetzungsarbeiten wird durch verschiedene Faktoren beeinflusst. Zum Einen können jederzeit zusätzliche Störungen bzw. Beschädigungen eines Fahrzeugs des Verkehrssystems entdeckt werden, deren Behebung den anfänglichen Wartungs- und Instandsetzungsplan (MRO-Plan) verändern. Solche Beschädigungen treten beispielsweise beim Flugzeug durch einen sogenannten Vogelschlag auf. Zum anderen kann es vorkommen, dass das Fahrzeug des Verkehrssystems aufgrund unvorhergesehener Einflüsse, wie beispielsweise schlechtem Wetter, nicht zum vereinbarten Zeitpunkt am Wartungsstandort eintrifft. Weiterhin kann das zum Durchführen der Wartungs- und Instandsetzungsarbeiten benötigte Zubehör unvorhersehbaren Einflüssen unterliegen, so dass geplante Wartungs- und Instandsetzungsarbeiten (MRO-Arbeiten) gar nicht oder nicht an dem dafür vorgesehenen Wartungsstandort durchgeführt werden können. Weitere Einflussfaktoren können auch eine veränderte Nutzungsintensität durch veränderte Marktbedingungen, starke saisonale Schwankungen oder Änderungen der Zielgebiete sein (z. B. Einsatz in Tropen, Wüsten, Polarregionen, Regionen mit vulkanischer Aktivität)

Aus diesem Grund besteht grundsätzlich das Problem, dass eine dezentrale Identifikation des Instandsetzungsbedarfs, also der Bedarf, der für die entsprechenden Wartungs- und Instandsetzungsarbeiten benötigt wird (MRO-Bedarf), an verschiedenen Wartungsstandorten für verschiedene Fahrzeuge des Verkehrssystems, getrennt von der dezentralen Abarbeitung und unter Berücksichtigung eines zentralen Verkehrsplans und unvorhergesehener Ereignisse geplant und gesteuert werden muss. Dazu sind Personal-, Ersatzteil und Werkzeugkapazitäten an dezentralen Standorten zu synchronisieren.

Bekannt sind jedoch nur Planungs- und Steuerungsprozesse, die sequenziell verlaufen und mit unnötigen Schleifen und einer Vielzahl unnötiger Schnittstellen von der Pla-nungsabteilung bis hin zum durchführenden Personal verbunden sind. Es können die unterschiedlichen Wartungsstandorte, geplante und ungeplante Arbeiten in Abhängigkeit der Belastung der Fahrzeuge nur unzureichend miteinander abgestimmt sein, wodurch beispielsweise bestimmte Ersatzteile, Werkzeuge und Transportvorrichtungen sowie ein spezifisch qualifiziertes Personal nur an bestimmten Wartungsstandorten verfügbar sind. Für ungeplante Arbeiten in Folge von Störungen sind daher teure zusätzliche Wartungsbewegungen oder Streichungen notwendig. Solche Prozesse werden durch speziell dafür hergestellte Softwaresysteme, wie beispielsweise TRAX, AMOS und anderen unterstützt. Hierin werden sowohl einzelne Diagnosedaten als auch Belastungsdaten der Fahrzeuge in der Planung berücksichtigt. Bei solchen Prozessen sowie Softwaresystemen treten eine mehrfache Redundanz bei der Datenerfassung und Datenerhaltung sowie Medien-und Informationsbrüche auf, die die Prozessleistungen verringern. Unter anderem aufgrund solcher Komplexität ist es beispielsweise den Luftverkehrssystembetreibern erschwert einzelne Wartungsaufgaben, die zu langwierigen Letter Checks gehören, einzeln entlang von kleinen Wartungsfenstern des Flugplanes zu vergeben und abzuarbeiten. Diese Zuweisung würde die langen Standzeiten während der Checks verringern und auch bestimmte Abläufe zusätzlich vereinfachen.

Aus dem Artikel von Sampigethaya et al. "Future enabled aircraft Communications and security: The next twenty years and beyond", accepted, in Proceedings of the IEEE, Special issue on Aerospace Communications and Networking in the Next Two Decades, (December, 2011) ist ein Prinzip bekannt, mit dem eine direkte Kommunikation zwischen Flugzeugen und einer um ein sogenanntes Cyber-Physical System (CPS) erweiterte Instandsetzungsinfrastruktur funktionieren soll. Unter einem CPS wird hier ein System verstanden, dass verschiedene mobile und eingebettete Geräte umfasst, die vorbereitet sind zum Verbinden und Koordinieren von Rechnerelementen und physikalischen Elementen eines Systems. Das Dokument betrifft vorranging die Sicherheit von Netzwerken und Kommunikationsinfrastrukturen.

Wünschenswert wäre eine Planung und Steuerung ohne unnötige Redundanzen bei der Datenerfassung, Datenerhaltung sowie ohne Medien- und Informationsbrüchen derart, dass möglichst keine oder nur eine geringfügige Verringerung der Prozessleistung auftritt und/oder jedenfalls die Planung von Wartungs- und Instandsetzungsarbeiten für insbesondere große Verkehrssysteme erleichtert wird.

Aus dem Artikel von Lee et al. "Intelligent Maintenance Systems: The Next Five Years and Beyond - Transforming Condition-based Maintenance to Productivity and Service Innovation" in Asset Management and Maintenance Journal, July 2010. S. 6 -13, ist die Verknüpfung von Diagnosedaten und einer vorausschauenden Wartung bekannt. Es werden zusätzliche Systeme benötigt, die trotz teilweiser Datenintegration mit manuellem Aufwand verbunden sind. Dadurch ist eine solche Verknüpfung im Kontext komplexerer Randbedingungen, wie sie in der Luftfahrt oder bei Schienensystemen auftreten, nicht anwendbar.

Es sind sogenannte integrierte Produkt-Service-Systeme (IPS-Systeme) bekannt, die die Durchführung von Wartungs- und Instandsetzungsarbeiten durch die Auftragserstellung und Materialbestellung bis hin zur Rückmeldung unterstützen. Üblicherweise bedürfen Aufträge und Meldungen manueller Statuseingaben. Auf Basis von durch Anwendung vorher festgelegter Regeln erhaltener Informationen wird eine Planung generiert. Die Regeln bestehen grundsätzlich aus einem Ablaufplan mit Ausführungsbedingungen und sind daher wenig adaptiv. Zudem werden die Arbeitspläne in der Regel manuell erstellt und können nur mit hohem Aufwand adaptiert werden. Dadurch wird eine wünschenswerte Agilität in der Durchführung der Wartungs- und Instandsetzungsarbeiten gehemmt.

Aus "Boeing eEnabled Solution" des Flugzeugherstellers Boeing ist eine Referenzarchitektur, mit der grundsätzlich eine strategische Verknüpfung und Integration von Geschäftsprozessen, Humanressourcen, Flugzeugen und Informationen ermöglicht werden soll. Die Planungs- und Steuerungsprozesse weisen aber auch eine Vielzahl unnötiger Schnittstellen von der Planungsabteilung bis hin zum durchführenden Personal auf, wodurch diese weiterhin kompliziert und zeitaufwändig bleiben.

Eine solche Vorgehensweise vermag nicht die Planung und Steuerung von Wartungsund Instandsetzungsarbeiten für Verkehrssysteme mit vielen einzelnen Fahrzeugen, die sich zwischen mehreren Wartungsstandorten bewegen, zu erleichtern. Durch hohe Redundanzen sowie einer Vielzahl unnötiger Schnittstellen kommt es zu einem hohen Aufwand sowie unnötiger Standzeiten von Werkzeugen, Ersatzteilen oder der Fahrzeuge, was einen zusätzlichen nicht unerheblichen Kostenaufwand mit sich bringt.

Wünschenswert ist es, ein hinsichtlich Vermeidung von Redundanzen sowie Standzeiten von Werkzeugen, Ersatzteilen oder Personal verbessertes Verfahren und System zur Planung und Steuerung von Wartungs- und Instandsetzungsarbeiten an einem Fahrzeug eines Verkehrssystems anzugeben.

An dieser Stelle setzt die Erfindung an, deren Aufgabe es ist ein Verfahren und ein System anzugeben, mittels der die Planung und Steuerung von Wartungs- und Instandsetzungsarbeiten an einem Fahrzeug eines Verkehrssystems verbessert werden kann. Insbesondere sollen die Standzeiten von Ersatzteilen, Werkzeugen und Fahrzeugen verringert werden.

Die Aufgabe hinsichtlich des Verfahrens wird durch ein Verfahren der eingangsgenannten Art gelöst, bei dem erfindungsgemäß auf die Merkmale des kennzeichnenden Teils des Anspruchs 1 vorgesehen sind. Die Aufgabe hinsichtlich des Systems wird durch ein System der eingangsgenannten Art gelöst, bei dem erfindungsgemäß auf die Merkmale des kennzeichnenden Teils des Anspruchs 13 vorgesehen sind.

Das Konzept der Erfindung geht von einem Ansatz aus zur Planung und Steuerung von Wartungs- und Instandsetzungsarbeiten an einem Fahrzeug eines Verkehrssystems mit einem Netzwerk umfassend folgende Netzwerkkomponenten: wenigstens ein Fahrzeug, ein dem wenigstens einen Fahrzeug zugeordnetes Bordbuch, Zubehör, wenigstens ein erstes dem Zubehör zugeordnetes Endgerät und wenigstens ein zweites dem Zubehör zugeordnetes Endgerät.

Vorzugsweise ist das Zubehör ein Werkzeug, ein Transportträger, ein Ersatzteil und/oder ein Wartungsausführender, insbesondere Arbeiter. Insbesondere werden unter Zubehör Ersatzteile und insbesondere kostenintensive Werkzeuge zu verstehen sein. Besonders bevorzugt kann ein erstes Endgerät einem Werkzeug und/oder ein weiteres erstes Endgerät einem Transportträger zugeordnet sein und/oder das zweite Endgerät einem Ersatzteil zugeordnet sein und/oder ein drittes Endgerät einem Wartungsausführenden, insbesondere einem Arbeiter, zugeordnet sein.

Erfindungsgemäß ist vorgesehen:
a) Senden von Zubehörbedarf definierenden Daten von dem Bordbuch in das Netzwerk,
b) Empfangen der Daten an dem ersten und dem zweiten Endgerät,
c) bidirektionale Kommunikation der Netzwerkkomponenten untereinander,
d) Zuweisung der Wartungs- und Instandsetzungsarbeiten,
e) Rückmeldung nach Durchführung der Wartungs- und Instandsetzungsarbeiten,
wobei die Zuweisung und die Rückmeldung durch wenigstens eine der Netzwerkkomponenten durchgeführt werden.

Das Konzept der Erfindung geht insbesondere davon aus, dass das erste und das zweite an Zubehör --z. B. ein Werkzeug, ein Transportträger, ein Ersatzteil und/oder ein Wartungsausführender, insbesondere Arbeiter-- vorgesehene Endgerät die Zubehörbedarf definierenden Daten gesendet von einem, insbesondere elektronischen und/oder vernetzbaren, Bordbuch des Fahrzeugs des Verkehrssystems zur Informationsverwaltung Endgerät empfangen. Das Bordbuch kommuniziert mit dem an dem Zubehör vorgesehenen ersten und/oder zweiten Endgerät und/oder das an dem Zubehör vorgesehene erste Endgerät kommuniziert mit dem zweiten Endgerät. Die Zuweisung der Wartungs-und Instandsetzungsarbeiten werden insbesondere mittels des Bordbuchs und/oder durch das erste und/oder zweite Endgerät durchgeführt. Die Rückmeldung an das Bordbuch über die erledigten Arbeiten wird durch das erste und/oder zweite Endgerät durchgeführt.

Besonders vorzugsweise umfasst eine bidirektionale Kommunikation eine Verhandlung der Netzwerkkomponenten untereinander und weiter den Schritt:
c') Alertmanagement, wenn die bidirektionalen Verhandlungen nicht erfolgreich sind. Sind beispielsweise erforderliche Ersatzteile, Werkzeuge, Gebäudemerkmale, Genehmigungen oder Mechaniker/Qualifikationen nicht verfügbar, so verhandelt das elektronische Bordbuch dezentral unter Berücksichtigung von Wartungs- und Reparaturzeitfenster, die durch den Flug- bzw. Fahrplan sowie den Fristenregeln des Fahrzeugsystems bestimmt werden. Dabei werden auch Transporte von Ersatzteilen bzw. Werkzeugen von einem Standort zum wartungsdurchführenden Standort durch das elektronische Bordbuch im Abgleich mit einem zentralen Überwachungssystem geplant und zugewiesen.

Ein weiterbgebildetes Verfahren umfasst die Schritte a) bis e) und insbesondere den Schritt c') und kann diese über eine Kommunikationsschnittstelle veranlassen, insbesondere werden die Schritte sequentiell, vorzugsweise in einer Schleife ausgeführt.

Das Konzept der Erfindung geht von der Überlegung aus, dass die den Zubehörbedarfinsbesondere ein Werkzeug, ein Transportträger, ein Ersatzteil, ggfs. auch ein Wartungsausführender, insbesondere Arbeiter-- definierenden Daten von einem insbesondere elektronischen Bordbuch des Fahrzeugs des Verkehrssystems zur Informationsverwaltung, insbesondere von einem in einem Flugzeug vorgesehenen Electronic flight bag (EFB), und/oder von einem an einem Bauteil des Fahrzeugs des Verkehrssystems vorgesehenen Endgerät gesendet werden. Ein solches Bordbuch umfasst insbesondere eine Selbstortung zum eigenständigen Bestimmen der Position, eine Funkverbindung, eine Verhandlungskomponente zur Verhandlung mit einem Endgerät, ein Fehlerbaumsystem, einen Datenspeicher, eine elektronische Datenschnittstelle, eine Möglichkeit zur Datentransformation, eine Benutzungsschnittstelle wie beispielsweise eine Eingabemaske und/oder einen Aufgabenplaner. Die den Zubehörbedarf --wenigstens ein Ersatzteil und ein Werkzeug-- definierenden Daten umfassen insbesondere den Wartungsplan des jeweiligen Fahrzeuges, aber auch unvorhergesehene Störungen und/oder Beschädigungen am Fahrzeug. Aus diesen Daten werden der Bedarf des Zubehörs ermittelt und direkt von dem Fahrzeug aus an die an dem Zubehör vorgesehene Endgeräte weitergeleitet. Der Begriff Zubehör umfasst insbesondere Werkzeuge, Ersatzteile, Transportvorrichtungen und/oder Personal.

Das erste und/oder zweite an dem Zubehör vorgesehene Endgerät empfängt insbesondere über einen Eingangskanal Informationen und/oder sendet über einen Ausgangskanal Steuersignale. Die über den Eingangskanal empfangenen Informationen werden in einer Speichereinheit des Endgeräts gespeichert und über eine Prozessoreinheit des Endgerätes verarbeitet. Vorteilhaft kann das erste Endgerät mit dem zweiten Endgerät bidirektional kommunizieren, also Informationen austauschen und abgleichen, und/oder das Bordbuch kann dadurch mit dem ersten und/oder zweiten Endgerät bidirektional kommunizieren. Die Kommunikation findet insbesondere derart statt, dass die Netzwerkkomponenten semantisch und/oder baumstrukturiert arbeiten.

Vorteilhaft ist das Konzept damit nicht auf einen Umweg der Übermittlung der Daten an eine zentrale Stelle angewiesen, die die Daten dann wiederum an das Zubehör --z. B. einem Ersatzteil und/oder ein Werkzeug oder ein Transportträger-- weiterleiten würde. Die Erfindung hat erkannt, dass eine direkte systemseitige Datenübermittlung die Anzahl der Schritte in der Prozessabwicklung verkürzt. Um die Anzahl der Schritte weiter zu verkürzen und zu die Prozessabwicklung zu vereinfachen, sieht das Konzept weiterhin vor, dass das Bordbuch und/oder das an einem Bauteil des Fahrzeugs des Verkehrssystems vorgesehene Endgerät mit den an dem Zubehör vorgesehenen Endgeräten kommunizieren und/oder dass die an dem Zubehör vorgesehenen Endgeräte untereinander kommunizieren. Das Endgerät ist insbesondere als ein miniaturisierter Computer wie beispielsweise ein sogenanntes eGrain und/oder als ein sogenanntes RFID-System ("radio-frequency identification") ausgebildet. Diese sind zur Selbstortung, Funkverbindung und Routenzuordnung vorgesehen. Zudem weisen sie eine Verhandlungskompo-nente auf, um empfangene Daten selbständig zu verarbeiten und eine Rückmeldung an das die Daten gesendete System zu geben. Somit wird beispielsweise eine defekte Schraube in einer Flugzeugtür noch während des Fluges direkt vom Flugzeug an den Mechaniker, der das Problem beheben soll, und an das dafür benötigte Werkzeug weitergeleitet. Das Werkzeug und der Mechaniker stehen dann, sobald das Flugzeug gelandet ist direkt am richtigen Standort bereit. Nachdem der Mechaniker das Problem gelöst hat, erhält das Flugzeug direkt Rückmeldung, dass die Arbeit erledigt ist.

Die Erfindung hat erkannt, dass durch eine direkte systemseitige Zuweisung der Wartungs- und Instandsetzungsarbeiten sowie eine direkte Rückmeldung nach Durchführung der Wartungs- und Instandsetzungsarbeiten die Planungs- und Steuerungsprozesse vereinfacht werden.

Das Konzept der Erfindung führt auch ein Computerprogrammprodukt gemäß Anspruch 9 zur Planung und Steuerung von Wartungs- und Instandsetzungsarbeiten für Verkehrssysteme mit einem Netzwerk umfassend folgende Netzwerkkomponenten: wenigstens ein Fahrzeug, ein dem wenigstens einen Fahrzeug zugeordnetes Bordbuch, Zubehör, wenigstens ein erstes dem Zubehör zugeordnetes Endgerät und wenigstens ein zweites dem Zubehör zugeordnetes Endgerät, wobei das Computerprogrammprodukt ausgebildet ist zum Laden in eine Speichereinheit wenigstens einer Netzwerkkomponente und das Softwarecodeabschnitte aufweist, mittels denen das Computerprogrammprodukt beim Laufen auf einer Prozessoreinheit der Netzwerkkomponente ausgebildet ist die Schritte des Verfahrens nach einem der vorstehenden Verfahrensansprüche auszuführen. Das Computerprogrammprodukt wird vorzugsweise in eine Speichereinheit des ersten und/oder zweiten an dem Zubehör vorgesehenen Endgeräts geladen. Vorteilhaft zeigt sich, dass dadurch die Zuweisung der Wartungs- und Instandsetzungsarbeiten systemseitig durchgeführt werden können.

Das Konzept der Erfindung führt auch auf ein digitales Speichermedium gemäß Anspruch 10, insbesondere elektronisches, optisches und/oder magnetisches Speichermedium, mit elektronisch auslesbaren Computer-implementierten Anweisungen, die so mit einem programmierbaren Computersystem zusammenwirken können, dass ein erfindungsgemäßes Verfahren ausgeführt wird. Ein solches digitales Speichermedium ist insbesondere ausgewählt aus einer Gruppe von: Speicherkarten, Disketten, CDs.

Das Konzept der Erfindung führt auch auf ein Endgerät zum Anbringen an Zubehör eines Verkehrssystems mit einem Netzwerk, wobei das Endgerät als Netzwerkkomponente des Netzwerkes vorgesehen ist. Erfindungsgemäß ist vorgesehen:
- einen Eingangskanal zum Empfangen von Informationen,
- einen Ausgangskanal zum Übermitteln eines Steuersignals,
- eine Speichereinheit zum Speichern der Informationen,
- eine Prozessoreinheit zum Verarbeiten eines erfindungsgemäßen Computerprogrammprodukts, und
- ein Kommunikationsprotokoll zum Definieren des Syntax, der Semantik und der Synchronisation der Kommunikation mit weiteren Netzwerkkomponenten,
wobei das Endgerät zur bidirektionalen Kommunikation mit den weiteren Netzwerkkomponenten ausgebildet ist.

Ein solches Endgerät ist insbesondere als ein hochminiaturisierter Computer, wie beispielsweise ein sogenanntes eGrain, und/oder als ein RFID-System ("radio-frequency identification") ausgebildet. Das Endgerät ist insbesondere an Zubehör vorgesehen, insbesondere an einem Werkzeug, Ersatzteil, einer Transportvorrichtung oder an einem portablen Gerät, das der entsprechende Personal mit sich trägt, wie bspw. an einem Tablet-PC. Das Endgerät ist insbesondere ausgebildet, Wartungs- und Instandsetzungsarbeiten mit weiteren Endgeräten und/oder einem an einem Fahrzeug vorgesehenen Bordbuch, insbesondere ein an einem Flugzeug vorgesehenen Electronic flight bag (EFB), zu kommunizieren.

Das Konzept der Erfindung führt auch auf ein System zur Planung und Steuerung von Wartungs- und Instandsetzungsarbeiten an einem Fahrzeug eines Verkehrssystems mit einem Netzwerk. Erfindungsgemäß ist vorgesehen:
- ein Zentralsystem zur Kapazitätsplanung, Darstellung von Daten, Einsatzplanung und/oder zum Eskalationsmanagement,
- Netzwerkkomponenten des Netzwerkes des Verkehrssystems, umfassend:
   - wenigstens ein Fahrzeug,
   - ein dem wenigstens einen Fahrzeug zugeordnetes Bordbuch,
   - Zubehör,
   - wenigstens ein erstes an dem Zubehör vorgesehenes Endgerät,
   - wenigstens ein zweites an dem Zubehör vorgesehenes Endgerät,
- eine Kommunikationsschnittstelle zum Austausch von Daten wenigstens zwischen dem Zentralsystem und den Netzwerkkomponenten,
wobei wenigstens eine der Netzwerkkomponenten ausgebildet ist zur Zuweisung der Wartungs- und Instandsetzungsarbeiten und die Rückmeldung nach dem Durchführen der Wartungs- und Instandsetzungsarbeiten.

Bevorzugt ist weiter vorgesehen, dass die Netzwerkkomponenten des Netzwerkes des Verkehrssystems weiter umfassen:
- wenigstens einen definierten Wartungsstandort mit zertifiziertem Wartungsumfang und/oder Wartungskapazität; und/oder
- einem Wartungsausführenden mit vorbestimmter Wartungsqualifikation und/oder Wartungskapazität, insbesondere mit Wartungsstandortzuordnung.

Die Kommunikationsschnittstelle ist insbesondere zum Austausch von Daten zwischen dem Zentralsystem und dem Bordbuch und/oder einem ersten und/oder zweiten Endgerät, und/oder zwischen dem Bordbuch und/oder einem ersten und/oder zweiten Endgerät und/oder zwischen dem ersten Endgerät und dem zweiten Endgerät vorgesehen. Das Bordbuch ist insbesondere vorbereitet zum Zuweisen von Wartungs- und Instandsetzungsarbeiten an wenigstens ein erstes und/oder zweites an dem Zubehör vorgesehenes Endgerät und/oder das erste und/oder zweite an dem Zubehör vorgesehene Endgerät ist vorbereitet zur Rückmeldung beispielsweise über die erledigten Arbeiten an das Bordbuch.

Vorteilhaft hat das Konzept der Erfindung erkannt, dass durch eine systemseitige Zuweisung und Rückmeldung der Wartungs- und Instandsetzungsarbeiten an einem Fahrzeug eines Verkehrssystems der Auftragsdurchlauf vereinfacht werden kann und die Anzahl der administrativen Schritte gekürzt werden können. Bei einer Flugzeugflotte wird somit beispielsweise ein Mechaniker direkt in Echtzeit von dem Flugzeug beauftragt. Dies wird durch eine integrierte Einplanung und Bereitstellung von Ersatzteilen und Werkzeugen sowie durch ein Flugzeug individualisiertes Fehlerbaumsystem unterstützt. Vorteilhafterweise erhöht sich dadurch die Reaktionsfähigkeit und die Ausnutzung von Wartezeiten zur Wartung und Instandsetzung wird verbessert.

Das Konzept der Erfindung führt auch auf eine Kommunikationsschnittstelle zum Austausch von Daten zwischen einem an einem Fahrzeug vorgesehenen Bordbuch und wenigstens einem Endgerät vorbereitet zur Verwendung in einem erfindungsgemäßen System und/oder in einem erfindungsgemäßen Verfahren. Zum Austausch der Daten sind diese insbesondere in einer Auszeichnungssprache, insbesondere in einer erweiterbaren Auszeichnungssprache (XML) in Form von Textdateien dargestellt und/oder die Kommunikation erfolgt insbesondere über Interaktionsprotokolle, für Kommunikationen der an dem Zubehör vorgesehenen Endgeräte untereinander. Die Kommunikations-schnittstelle ist insbesondere als eine Funkverbindung und/oder elektronische Daten-schnittstelle ausgebildet. Für die Verhandlungskomponenten werden vorzugsweise Austauschprotokolle, wie sie beispielsweise FIPA definiert sind, verwendet.

Auf Basis des Konzepts der Erfindung lässt sich im Rahmen von Weiterbildungen ein vielversprechendes System und Verfahren zur Planung und Steuerung von Wartungsund Instandsetzungsarbeiten an einem Fahrzeug eines Verkehrssystems mit einem Netzwerk angeben, das zudem in den Zeichnungen beispielhaft erläutert ist. Das weitergebildete Verfahren und System führt die Planung und Steuerung von Wartungs- und Instandsetzungsarbeiten systemseitig durch. Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Insbesondere hat es sich als vorteilhaft erwiesen, dass das Netzwerk des Verkehrssystems ein an einem Bauteil des wenigstens einen Fahrzeugs vorgesehenes Endgerät aufweist und das Endgerät ausgebildet ist Zubehörbedarf definierende Daten in das Netzwerk zu senden. Unter einem Bauteil wird hier insbesondere ein Bauteil eines Flugzeuges, wie bspw. eine Flugzeugtür o.ä. verstanden, das insbesondere nicht mit dem Bordbuch kommuniziert. Somit können beispielsweise auch am Flugzeug nachgerüstete Bauteile bei den Wartungs- und Instandsetzungsarbeiten direkt in dem System berücksichtigt werden. Das an dem Bauteil vorgesehene Endgerät ist insbesondere vorbereitet zum Zuweisen von Wartungs- und Instandsetzungsarbeiten an wenigstens ein erstes und/oder zweites an dem Zubehör vorgesehenes Endgerät.

Insbesondere eignet sich das Verfahren für ein Netzwerk, das wenigstens ein drittes dem Zubehör zugeordnetes Endgerät aufweist. Das Zubehör ist insbesondere ausgewählt aus einer Gruppe von: Ersatzteilen, Werkzeugen, Transportvorrichtungen und Arbeitern. Somit kann beispielsweise ein erstes Endgerät an einem Arbeiter vorgesehen sein, ein zweites Endgerät an einem Werkzeug und/oder einer Transportvorrichtung und ein drittes Endgerät an einem Ersatzteil oder ein erstes Endgerät ist an einem Werkzeug, ein weiteres erstes Endgerät einem weiteren Werkzeug vorgesehen.

Insbesondere eignet sich das Verfahren auch dazu, dass die Netzwerkkomponenten über eine Kommunikationsschnittstelle kommunizieren. Es werden über die Kommunikationsschnittstelle Daten insbesondere zwischen einem an einem Fahrzeug vorgesehenen Bordbuch und wenigstens einem Endgerät ausgetauscht. Die Kommunikationsschnittstel-le ist insbesondere als eine Funkverbindung und/oder elektronische Datenschnittstelle ausgebildet.

Insbesondere ist ein Verfahren vorgesehen, das die den Zubehörbedarf definierenden Daten in das die den Zubehörbedarf definierenden Daten in das an dem Fahrzeug vorgesehene Bordbuch aus Aufgabenplänen, insbesondere Wartungs- und Instandsetzungsplänen, und/oder Überwachungssensoren zur Überwachung von Bauteilen des wenigstens einen Fahrzeugs transformiert werden.

Insbesondere ist ein Verfahren vorgesehen, das die den Zubehörbedarf definierenden Daten von einem Zentralsystem zum Darstellen der Daten, zum Eskalationsmanagement und/oder zur Kapazitäts- und Einsatzplanung empfangen werden. Die Darstellung der Daten umfasst insbesondere eine Übersicht und Detailansicht über den Zustand aller Fahrzeuge in dem Verkehrssystem, eine Übersicht und Detailansicht über die anstehenden, in Bearbeitung und abgeschlossenen Wartungs- und Instandsetzungsarbeiten, eine Übersicht über die noch nicht unter den Netzwerkkomponenten zu Ende verhandelten Wartungs- und Instandsetzungsarbeiten sowie eine Übersicht über Planänderungen. Durch eine solche Darstellung der Daten kann vorteilhaft bei einer Eskalation eine Neuordnung von Aufgaben, eine Einplanung von Kapazitäten und eine Kommunikation zur Einsatzplanung im Rahmen eines Eskalationsmanagements durchgeführt werden. Die Kapazitätsplanung erfolgt insbesondere über ein Kapazitätsplanungswerkzeug, welches die Schritte Auswertung und Routenzuordnung umfasst. Das Kapazitätsplanungswerk-zeug weist insbesondere einen Aufgabenplaner, einen Kapazitätsplaner, ein Regelsystem als Grundlage für die dezentrale Verhandlungen der einzelnen Netzwerkkomponenten und eine Benutzeroberfläche auf.

Insbesondere hat es sich als vorteilhaft erwiesen, dass das wenigstens eine erste und ein zweites Endgerät Messdaten erhebt und damit seine Position selbst bestimmt. Somit kann das erste und zweite Endgerät beispielsweise bei einer Anfrage, ob das Zubehör an einem bestimmten Wartungsstandort an welcher Stelle liegt und somit beispielsweise bei einer unvorhergesehenen Arbeit zu Verfügung steht, direkt eine Rückmeldung geben.

Ausführungsbeispiele der Erfindung werden nun nachfolgend anhand der Zeichnungen im Vergleich zum Stand der Technik, welcher zum Teil ebenfalls dargestellt ist, beschrieben. Diese sollen die Ausführungsbeispiele nicht notwendiger Weise maßstäblich darstellen, vielmehr ist die Zeichnung, in schematisierter Form ausgeführt. Es ist zu berücksichtigen, dass vielfältige Modifikationen und Änderungen betreffend die Form und das Detail einer Ausführungsform vorgenommen werden können ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Weiter Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 ein grundsätzliches Ablaufdiagramm eines Verfahrens 1000 zur Wartungsplanung und -steuerung;
Fig. 2 ein Schema eines Systems, hier im Prinzip ein Cyper-Physical System (CPS), als Basis einer Wartungs- und Instandsetzungsplanung und -steuerung gemäß einer bevorzugten Ausführungsform;
Fig. 3 ein Ablaufdiagramm für ein beispielhaftes Prozesskonzept dezentraler Wartungund Instandsetzungsplanung und -steuerung gemäß einer bevorzugten Ausführungsform;
Fig. 4 ein Ablaufdiagramm für einen beispielhaften Detailprozess der Zuweisung der Wartungs- und Instandsetzungsaufgaben gemäß einer bevorzugten Ausführungsform;
Fig. 5 ein weiteres Schema eines Systems für die dezentrale Planung und Steuerung von Wartungs- und Instandsetzungsarbeiten gemäß einer bevorzugten Ausführungsform.

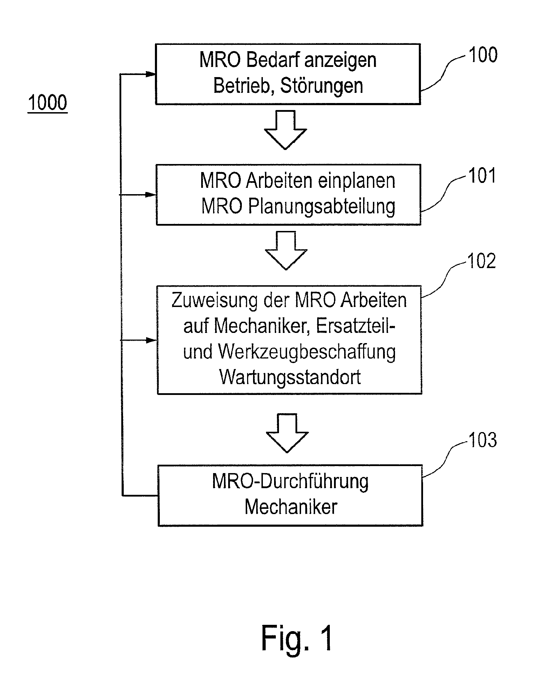

Fig. 1 zeigt beispielhaft und grundsätzlich ein Verfahren 1000 zur Wartungsplanung und - steuerung für Wartungs- und Instandhaltungsarbeiten --die auch als Maintenance, Repair and Overhaul - MRO abgekürzt werden und in Fig. 1 als MRO bezeichnet sind. In einem ersten Schritt 100 wird der Wartungs- und Instandsetzungsbedarf angezeigt. Dieser umfasst den allgemeinen Betrieb, also feststehende, geplante Wartungs- und Instandsetzungsintervalle, sowie unerwartete Störungen, die zusätzliche Instandsetzungsarbeiten zur Folge haben. Danach werden für den unter Schritt 100 angezeigten Wartungs- und Instandsetzungsbedarf die entsprechenden Wartungs- und Instandsetzungsarbeiten über eine Wartungs- und Instandsetzungsplanungsabteilung im Schritt 101 eingeplant. Über diese findet eine Zuweisung der Wartungs- und Instandsetzungsarbeiten auf das Zubehör, wie das entsprechenden Personal sowie auf die Ersatzteile- und Werkzeugbeschaffung im Schritt 102, statt. Nach der Zuweisung werden die Wartungs- und Instandsetzungsarbeiten durch das zugewiesene Personal im Schritt 103 durchgeführt.

Ein solches Verfahren 1000 weist noch den Nachteil auf, dass es sequenziell verläuft und somit unnötige Standzeiten von Personal, Ersatzteilen und Werkzeugen entstehen können. Zudem ist es wenig flexibel und weist von dem Anzeigen des Wartungs- und Instandsetzungsbedarfs im Schritt 100 zwei weitere Zwischenschritte bis zur Durchführung der Wartungs- und Instandsetzungsarbeiten im Schritt 103 auf, was wiederum nachteilig für die Auslastung des Zubehörs und der Fahrzeuge eines Verkehrssystems ist.

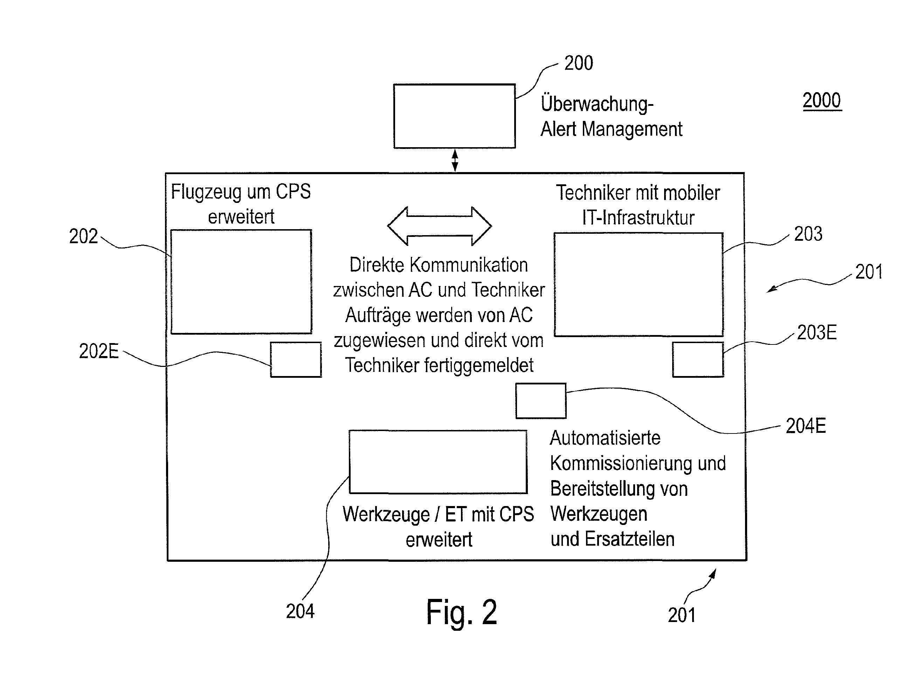

Fig. 2 zeigt das Prinzip eines dezentralen Systems 2000 für eine CPS-basierte Wartungsund Instandsetzungsplanung und -steuerung. Diese ist nicht an einen sequenziellen Ablauf gebunden, sondern kann vielmehr parallele, d. h. unabhängig voneinander und/oder zeitgleich zueinander ablaufende Teilprozesse umfassen. Mit einem CPS 201 steht in Fig. 2 ein Überwachungs- und Alertmanagement 200 in Verbindung. Das Überwachung- und Alertmanagement 200 ist dazu ausgebildet die grundlegende Kapazitätsplanung zentral für alle Fahrzeuge des entsprechenden Verkehrssystems zu regeln und bildet somit die Grundlage der Planung und Steuerung. Das CPS 201 sieht ein um ein CPS erweitertes Flugzeug 202 als Beispiel für ein Fahrzeug sowie Personal 203 mit mobilem Endgerät vor. Es stehen das Flugzeug 202 mit einem elektronischen vernetzbaren Bordbuch 202E und das Personal 203 oder dergleichen Wartungsausführende mit einem Endgerät 203E in direkter Kommunikation zueinander, was in Fig. 2 durch einen Doppelpfeil angedeutet ist. Die Wartungs- und Instandsetzungsaufgaben werden dadurch, im Gegensatz zum Stand der Technik, direkt vom Flugzeug 202 an das Personal 203 über die Geräte 202E, 203E zugewiesen und bei Fertigstellung der Aufgaben direkt von dem mobilen Endgerät 203E des Personals 203 an das Flugzeug 202 und dessen Bordbuch 202E zurückgemeldet. Weiterhin sieht das CPS 201 Werkzeuge, Transportträger und Ersatzteile 204 vor, die mit CPS erweitert sind; somit ebenfalls ein Endgerät 204E aufweisen. Durch die Erweiterung durch CPS findet eine automatisierte Kommissionierung und Bereitstellung der Werkzeuge, Transportträger und Ersatzteile 204 statt. Durch dieses Prinzip werden der Auftragsdurchlauf und die Anzahl der administrativen Schritte gekürzt. Das Personal 203 kann direkt in Echtzeit vom Flugzeug 202 beauftragt werden. Dies wird durch eine integrierte Einplanung und Bereitstellung von Ersatzteilen, Transportträger und Werkzeugen 204 oder sowie durch ein Flugzeugindividualisiertes Fehlerbaumsystem unterstützt. Dadurch erhöht sich die Reaktionsfähigkeit im Bereich der Wartung und Instandsetzung und die Standzeiten der Flugzeuge können durch zusätzliche Arbeiten gekürzt werden. Zudem werden Wartezeiten auf beispielsweise Ersatzteile oder Werkzeuge verringert.

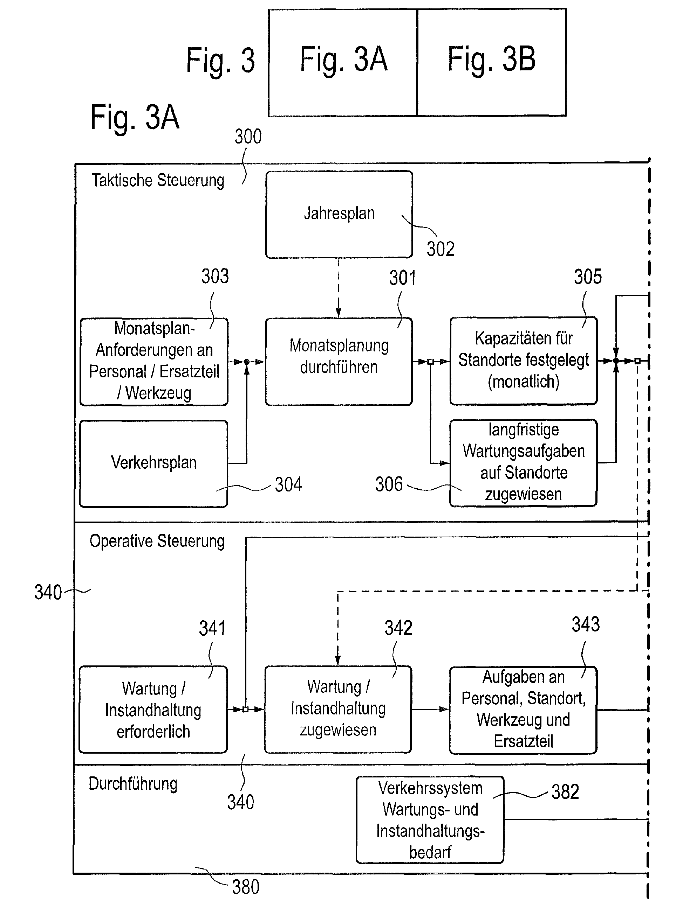

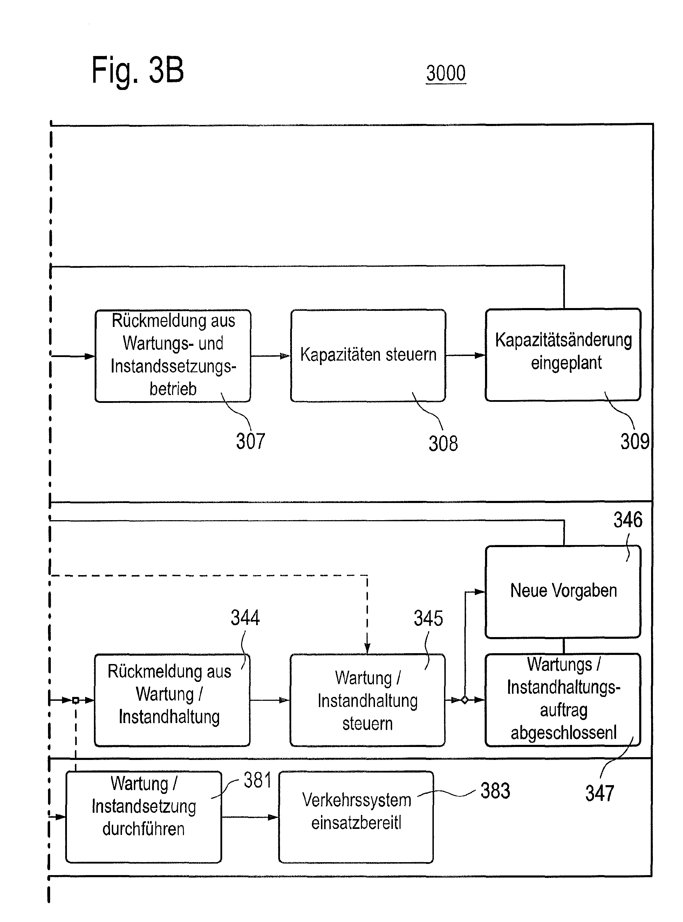

Fig. 3 zeigt ein Prozesskonzept für ein Verfahren 3000 zur dezentraler Wartungs- und Instandsetzungsplanung und -steuerung. Diese ist nicht an einen sequenziellen Ablauf gebunden, sondern kann vielmehr parallele, d. h. unabhängig voneinander und/oder zeitgleich zueinander ablaufende Teilprozesse umfassen. Das Prozesskonzept umfasst eine taktische Steuerung 300, eine operative Steuerung 340 sowie die Durchführungsstruktur 380, wobei die taktische Steuerung 300 mit den operativen Steuerung 340 sowie die operative Steuerung 340 mit der Durchführungsstruktur 380 über Schnittstellen verbunden sind. Im Bereich der taktischen Steuerung 300 ist die Monatsplanung vorgesehen. Zum Durchführen der Monatsplanung im Schritt 301 werden der Jahresplan 302, der Monatsplan 303 mit Anforderungen an das Personal, die Ersatzteile und Werkzeuge sowie der Verkehrsplan 304 berücksichtigt. Mit der im Schritt 301 durchgeführten Monatsplanung werden monatlich Kapazitäten für die Wartungsstandorte im Schritt 305 festgelegt sowie langfristige Wartungsaufgaben auf die Wartungsstandorte im Schritt 306 zugewiesen. Die Informationen werden zum Einen innerhalb der taktischen Steuerung 300, aber auch in der operativen Steuerung 340 weiterverarbeitet. In der taktischen Steuerung 300 werden die Informationen an den entsprechenden Wartungs- und Instandsetzungsbetrieb im Schritt 307 weitergeleitet, der hierzu eine Rückmeldung äußert. Daraufhin werden die Kapazitäten im Schritt 308 gesteuert und etwaige Kapazitätsänderungen im Schritt 309 eingeplant. Mit der eingeplanten Kapazitätsänderung des Schrittes 309 findet ein erneuter Abgleich zwischen den für die Wartungsstandorte festgelegten Kapazitäten des Schrittes 305 sowie den langfristigen auf die Wartungsstandorte zugewiesenen Wartungsaufgaben statt. Damit werden erneut und ggfs. mehrfach die Schritte 307, 308 und/oder 309 durchgeführt.

Diese Informationen werden ebenfalls an die operative Steuerung 340 weitergeleitet. Insbesondere fließen sie in die Wartungs- und Instandsetzungszuweisungen im Schritt 342 ein sowie in die Wartungs- und Instandsetzungssteuerung im Schritt 345 ein. Die operative Steuerung 340 wird durch ein Eingangssignal initiiert, das anzeigt, wenn die Wartung und Instandsetzung des Schrittes 341 erforderlich. Mit dieser Information sowie eventuell neuer Vorgaben aus dem Schritt 346 wird die Wartung und Instandsetzung im Schritt 342 zugewiesen.

Die Aufgaben werden an das Personal, den Wartungsstandort, das Werkzeug und die Ersatzteile im Schritt 343 verteilt. Auf diese Information wird zum Einen im Schritt 344 eine Rückmeldung aus der Wartung und Instandsetzung abgewartet sowie zum Anderen werden diese Information an die Durchführungsstruktur 380 weitergeleitet. Entweder führen diese Informationen zu einer Rückmeldung aus der Wartung und Instandsetzung im Schritt 344, durch die die Wartung und Instandsetzung dann gesteuert wird im Schritt 345 und dadurch im Schritt 347 die Wartungs- und Instandsetzungsaufgabe abgeschlossen wird. Oder eine neue Vorgabe im Schritt 346 führt zu einer neuen Wartungs- und Instandsetzungszuweisung im Schritt 342 oder diese Informationen führen zum Durchführen der Wartung und Instandsetzung im Schritt 381. Zum Durchführen der Wartung und Instandsetzung im Schritt 381 werden zusätzlich zu den Informationen aus der operativen Steuerung 340 auch Informationen über den Wartungs- und Instandsetzungsbedarf des Verkehrssystems aus dem Schritt 382 erhalten. Nach dem Durchführen der Wartung und Instandsetzung im Schritt 381 wird das Verkehrssystem einsatzbereit gemeldet im Schritt 383.

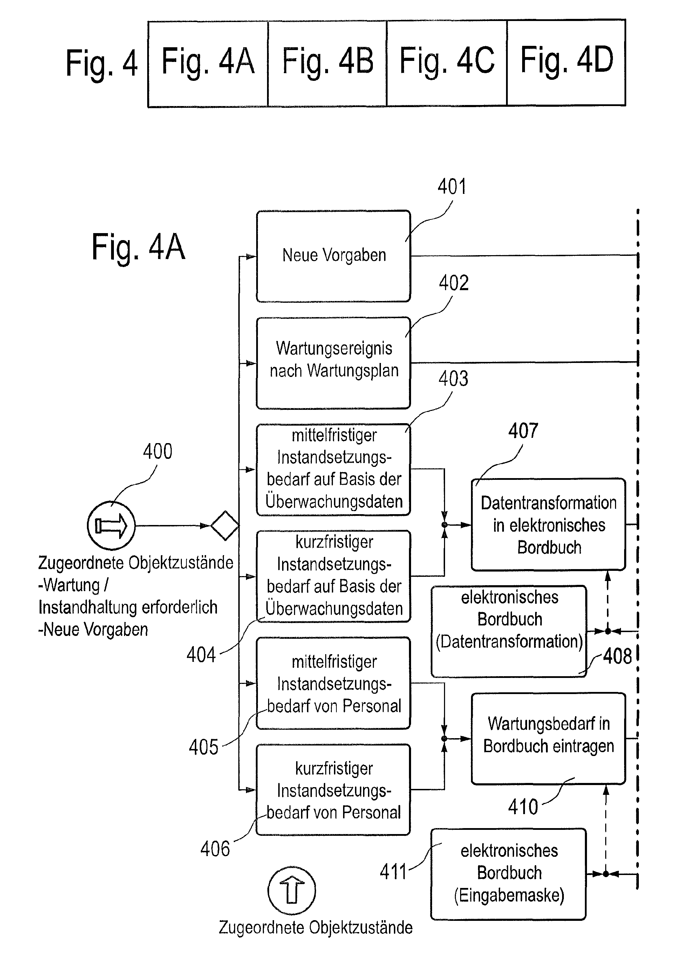

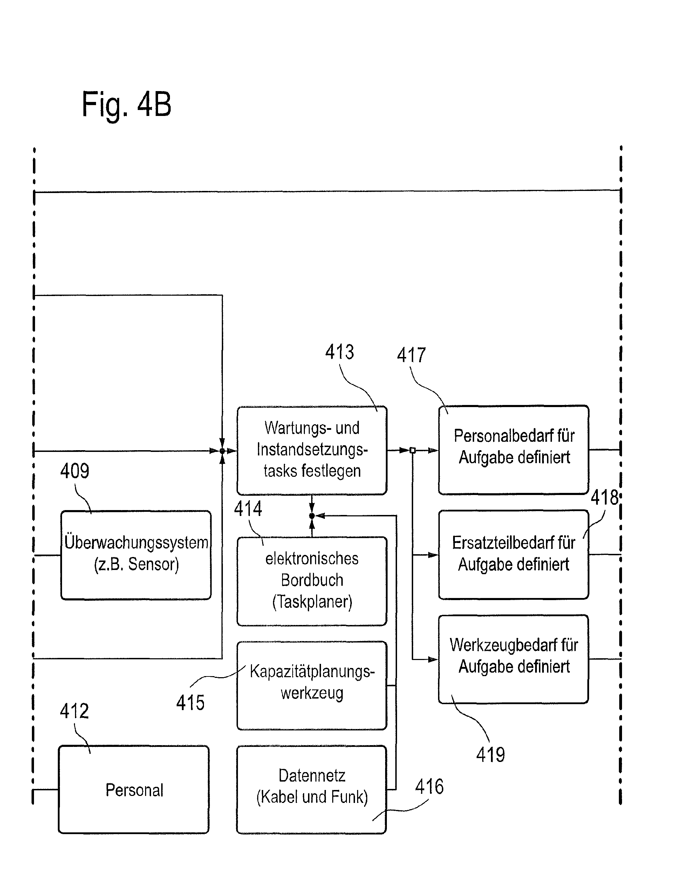

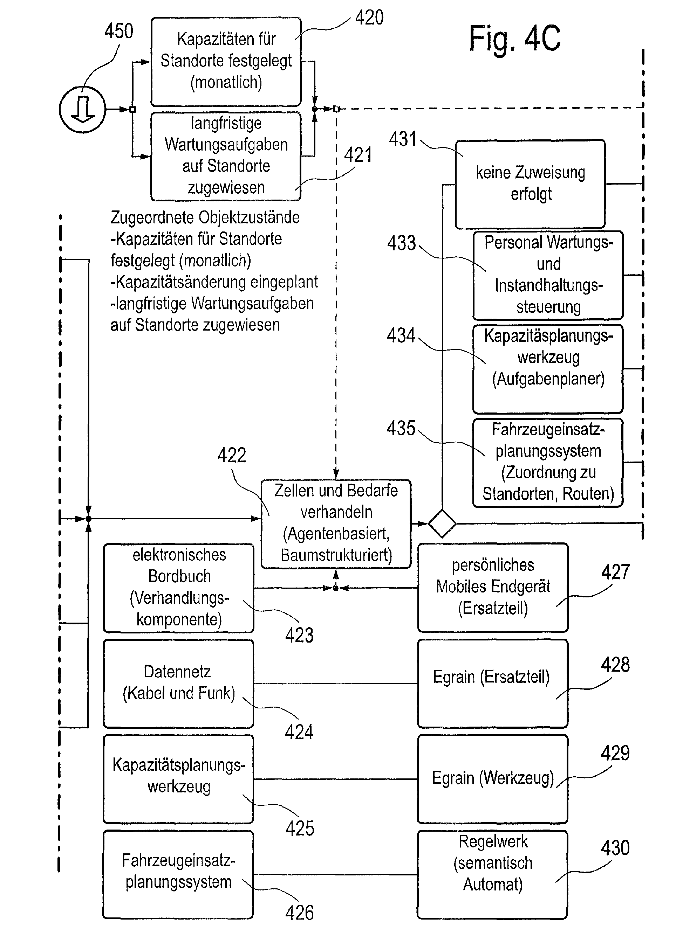

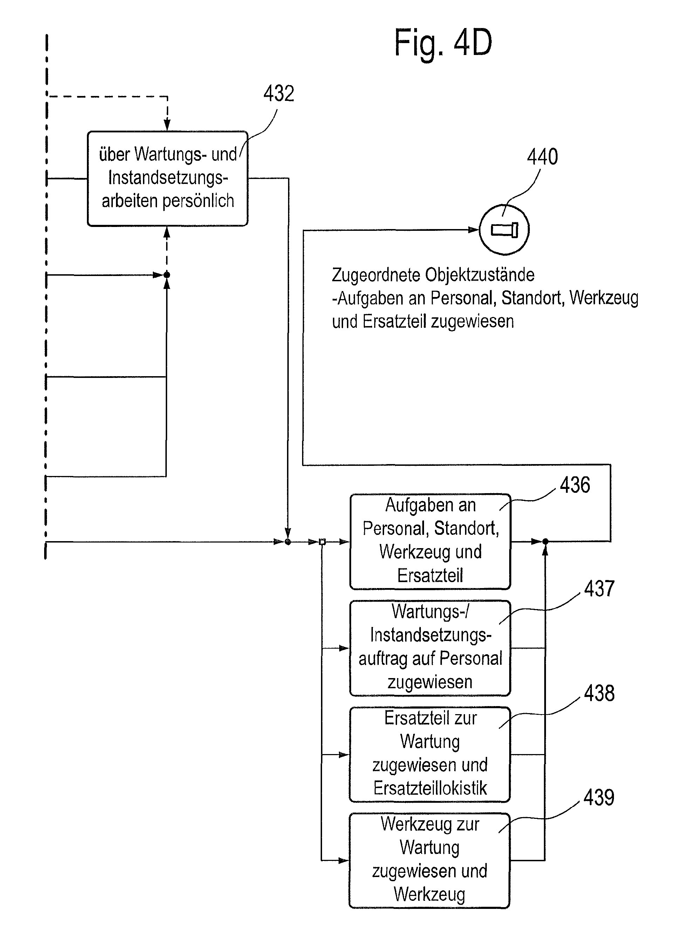

Fig. 4 zeigt ein Verfahren 4000 für einen Detailprozess der Zuweisung der Wartungs- und Instandsetzungsaufgaben. Dabei findet die Zuweisung gemäß dem grundsätzlichen Konzept mittels eines elektronischen Bordbuchs eines Fahrzeuges des Verkehrssystems und/oder mittels wenigstens einem an Zubehör vorgesehenen Endgerät statt. In einem ersten Schritt 400 werden durch das elektronische Bordbuch 202E angezeigt, ob und welche langfristig geplanten und/oder täglichen Wartungs- und Instandsetzungsarbeiten erforderlich sind und ob neue Vorgaben aufgrund von Störungen berücksichtigt werden können. Ein solches elektronisches Bordbuch ist zur Selbstortung, zur Funkverbindung und/oder zur Datentransformation vorgesehen. Zudem weist es ein Fehlerbaumsystem, eine elektronische Datenschnittstelle wie beispielsweise XML oder FIPA, eine Benutzungsschnittstelle wie beispielsweise eine Eingabemaske und/oder einen Aufgabenplaner auf.

Über eine Datenschnittstelle werden die in dem ersten Schritt 400 angezeigten Daten zur Weiterverarbeitung in die folgenden Schritte unterteilt: neue Vorgaben im Schritt 401, Wartungsereignis nach Wartungsplan im Schritt 402, mittelfristiger Instandsetzungsbedarf auf Basis von Überwachungsdaten im Schritt 403, kurzfristiger Instandsetzungsbedarf auf Basis der Überwachungsdaten im Schritt 404, mittelfristiger Instandsetzungsbedarf von Personal im Schritt 405 und kurzfristiger Instandsetzungsbedarf von Personal im Schritt 406.

Die Überwachungsdaten aus den Schritten 403 und 404 werden zusammengeführt und in einem weiteren Schritt 407 in das elektronische Bordbuch 202E transformiert. Dabei werden die Daten aus einem Überwachungssystem 409 und die Datentransformation in dem elektronischen Bordbuch 202E im Schritt 408 zusammengeführt. Das Überwachungssystem 409 weist beispielsweise Sensoren zum Feststellen des Bauteilzustandes eines Bauteils eines Fahrzeuges auf und eine Funkverbindung mit dem Bordbuch, um diesem den Bauteilzustand mitzuteilen.

Der Instandsetzungsbedarf 405, 406 von Personal wird zusammengeführt und in einem weiteren Schritt 410 als Wartungsbedarf in das Bordbuch 202E eingetragen. Der Personalbedarf 412 wird über eine Eingabemaske 411 des elektronischen Bordbuches mit dem Bordbuch 202E zusammengeführt und als Wartungsbedarf in das Bordbuch im Schritt 410 eingetragen.

Das Wartungsereignis nach Wartungsplan 402, die Datentransformation in das elektronische Bordbuch im Schritt 407 und der in das Bordbuch eingetragene Wartungsbedarf im Schritt 410 werden zusammengeführt. In einem nächsten Schritt 413 werden damit die Wartungs- und Instandsetzungsaufgaben festgelegt. Mit den festgelegten Wartungs- und Instandsetzungsaufgaben werden in weiteren Schritten der Personalbedarf im Schritt 417, der Ersatzteilbedarf im Schritt 418 und der Werkzeugbedarf im Schritt 419 für die entsprechende Aufgabe bzw. Aufgaben definiert. Diese Daten werden in einem weiteren Schritt 401 mit den neuen Vorgaben zusammengeführt. Mit Hilfe dieser zusammengeführten Daten sowie weiteren Daten werden die Zeiten und der Bedarf unter den beteiligten Geräten verhandelt. Zu den weiteren Daten zählen die Festlegung der Kapazitäten für die einzelnen Wartungsstandorte im Schritt 420 und das Zuweisen der langfristigen Wartungsaufgaben auf die Wartungsstandorte im Schritt 421.

Weitere Daten werden aus dem elektronischen Bordbuch im Schritt 423, welches als Verhandlungskomponente selbstständig, also systemseitig agiert, dem Datennetz im Schritt 424, wie bspw. Kabel und Funk, einem Kapazitätsplanungswerkzeug im Schritt 425, einem Fahrzeugeinsatzsystem im Schritt 426, einem an einem Ersatzteil befestigten mobilen Endgerät in Forme eines eGrain im Schritt 427, einem an einem Ersatzteil vorgesehenen Endgerät in Form eines eGrain im Schritt 428, einem an einem Werkzeug vorgesehenen Endgerät in Form eines eGrain im Schritt 429, und einem Regelwerk im Schritt 430 zusammengeführt.

Die Verhandlungen finden beispielsweise unter den eGrains 428, 429 statt und das Ergebnis wird dann von den eGrains direkt an das elektronische Bordbuch 202E im schritt 423 weiter geleitet. Somit werden mehrfache Rückmeldungen an ein Zentralsys-tem überflüssig und die Anzahl der benötigten Schleifen wird reduziert. Das elektronische Bordbuch 202E wird im Schritt 423 gespeichert und die Daten werden vorzugsweise baumstrukturiert. Somit können mehrere gleichartige Objekte miteinander verkettet werden, so dass die ansonsten lineare Struktur der Daten aufgebrochen wird und eine Verzweigung stattfindet.

Die Daten aus dem Regelwerk werden vorzugsweise semantisch und/oder automatisch verarbeitet, also derart, dass die entsprechenden Daten mit einer eindeutigen Beschreibung versehen werden und somit systemseitig und/oder automatisch weiterverarbeitet werden können.

Waren die Verhandlungen erfolgreich, finden verschiedene systemseitige Zuweisungen statt. Zu diesen gehören: in einem ersten Schritt 436 die Zuweisung der Aufgaben an das Personal, den Wartungsstandort, das Werkzeug und/oder die Ersatzteile, in einem weiteren Schritt 437 die Zuweisung des Wartungs- und Instandsetzungsauftrags an das Personal, in einem weiteren Schritt 438 die Zuweisung der entsprechenden Ersatzteile zur Wartung über die Ersatzteillogistik und in noch einem weiteren Schritt 439 die Zuweisung der Werkzeuge zur Wartung. Durch diese Zuweisungen sind alle zu erledigenden Aufgaben sowie das dazu benötigte Zubehör im Schritt 440 zugewiesen und die entsprechenden Wartungs- und Instandsetzungsaufgaben können erledigt werden.

Waren die Verhandlungen in Schritt 422 nicht erfolgreich, erfolgt zunächst keine Zuweisung im Schritt 431. Dann werden mit Hilfe der zusammengeführten Daten aus den Schritten 420 und 421 sowie zusammengeführten Daten aus über das Personal der Wartungs- und Instandsetzungssteuerung im Schritt 433, einem Kapazitätsplanungswerkzeug im Schritt 434 --wie beispielsweise einem Aufgabenplaner und einem Fahrzeugeinsatzplanungssystem, durch das eine Zuordnung zu den Wartungsstandorten entsprechend der Routen des Fahrzeuges stattfindet-- die Wartungs- und Instandsetzungsarbeiten persönlich zugewiesen im Schritt 432 und mit den Verhandlungsdaten aus Schritt 422 zusammengeführt. Auch hier werden danach die oben beschriebenen Schritte 436 bis 440 durchgeführt.

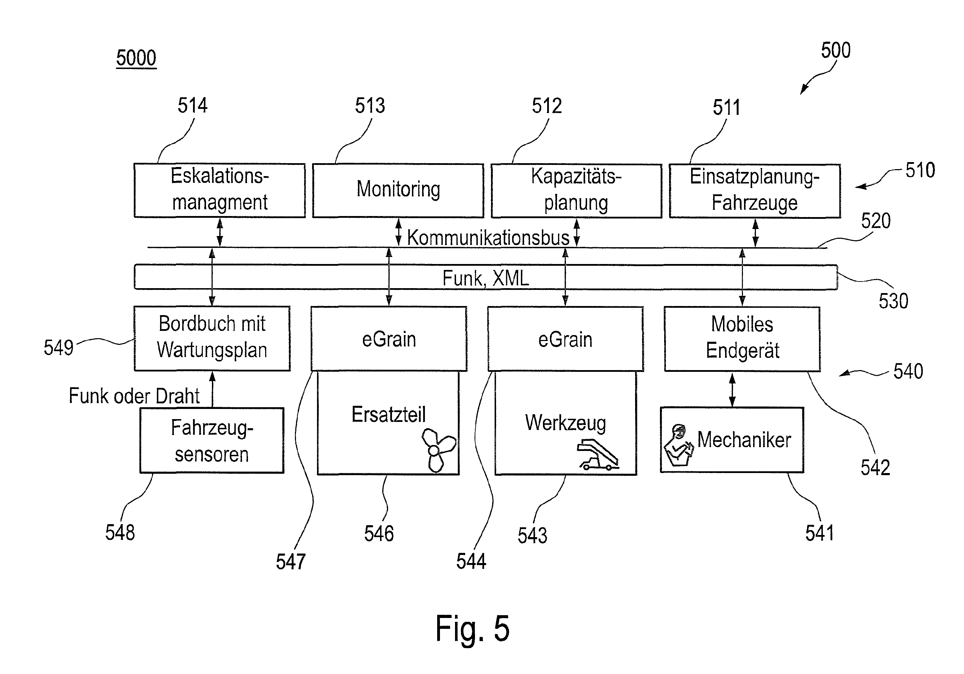

Fig. 5 zeigt eine Systemarchitektur 500 für ein System 5000 zur dezentralen Planung und Steuerung von Wartungs- und Instandsetzungsarbeiten. Diese ist nicht an einen sequenziellen Ablauf gebunden, sondern kann vielmehr parallele, d. h. unabhängig voneinander und/oder zeitgleich zueinander ablaufende Teilprozesse umfassen. Die Systemarchitektur 500 weist ein Zentralsystem 510 und ein dezentrales System 540 auf, welche über einen Kommunikationsbus 520 --hier über eine Schnittstelle 530 über Funk im XML-Format-- miteinander verbunden sind. Das Zentralsystem 510 weist eine Einsatzplanung 511 zum Planen der Einsätze der jeweiligen Fahrzeuge, eine Kapazitätsplanung 512, ein Monitoring 513 und ein Eskalationsmanagement 514 auf. Das dezentrale System 540 weist einen Mechaniker 541 mit einem mobilen Endgerät 542, z. B. in Form eines eGrain, ein mit einem Endgerät in Form eines eGrain 544 versehenes Werkzeug und/oder Transportvorrichtung 543, ein mit einem weiteren Endgerät in Form eines eGrain 547 versehenes Ersatzteil 546 sowie ein Bordbuch 549 mit Wartungsplan auf. Das Bordbuch 549 ist über Funk oder Draht mit Sensoren 548 im Fahrzeug verbunden. Das dezentrale System 540 sendet Daten über eine Schnittstelle 530 über Funk im XML-Format an den Kommunikationsbus 520.

Das dezentrale System 540 ordnet die einzelnen Aufgaben einer langfristigen Wartungsarbeit somit den täglichen Wartungsarbeiten flexibel zu entsprechend den Aufenthaltszeitfenstern der Fahrzeuge am WartungsWartungsstandort zu. Somit werden die Standzeiten der Verkehrssysteme im Rahmen großer Wartungsaufgaben reduziert. Die Zuweisung der einzelnen Aufgaben findet dezentral und systemseitig und/oder automatisch statt. Ein manueller Eingriff ist im Wesentlichen lediglich für die Kapazitätsplanung 512 und das Eskalationsmanagement 514 vorgesehen.

### Bezugszeichenliste

- 100: Wartungs- und Instandsetzungsbedarf
- 101: Wartungs- und Instandsetzungsarbeiten
- 102: Ersatzteile- und Werkzeugbeschaffung
- 103,203,406: zugewiesenes Personal
- 200: Überwachung- und Alertmanagement
- 201: CPS (Cyber-Physical System)
- 202: Flugzeug
- 202E, 549: elektronisches Bordbuch
- 203E, 204E, 542: mobiles Endgerät
- 300: taktische Steuerung
- 301: Monatsplanung
- 302: Jahresplanung
- 304: Verkehrsplan
- 305, 306, 420, 421: Wartungsstandorte
- 307: Wartungs- und Instandsetzungsbetrieb
- 308: Kapazität
- 309: Kapazitätsänderung
- 340: operative Steuerung
- 341, 342, 344, 381: Wartung und Instandsetzung
- 342: Instandsetzungszuweisung
- 345, 433: Wartungs- und Instandsetzungssteuerung
- 347: Wartungs- und Instandsetzungsaufgabe
- 380: Durchführungsstruktur
- 382: Verkehrssystem
- 402: Wartungsplan
- 403, 404: Überwachungsdaten
- 405, 406: Instandsetzungsbedarf
- 408: Datentransformation
- 409: Überwachungssystem
- 410: Wartungsbedarf
- 412, 417: Personalbedarf
- 418: Einzelbedarf
- 419: Werkzeugbedarf
- 422: Verhandlungen
- 423: Verhandlungskomponente
- 424: Datennetz
- 425, 434: Kapazitätsplanungswerkzeug
- 426: Fahrzeugeinsatzsystem
- 427, 428, 429, 544, 547: eGrain
- 430: Regelwerk
- 436: Zuweisung der Aufgaben an das Personal
- 437: Zuweisung des Wartungs- und Instandsetzungsauftrags
- 438: Zuweisung der entsprechenden Ersatzteile
- 439: Zuweisung der Werkzeuge zur Wartung
- 440: Zubehör
- 500: Systemarchitektur
- 510: Zentralsystem
- 511: Einsatzplanung
- 512: Kapazitätsplanung
- 513: Monitoring
- 514: Eskalationsmanagement
- 520: Kommunikationsbus
- 530: Schnittstelle
- 540: dezentrales System
- 541: Mechaniker
- 543: Transportvorrichtung
- 1000, 3000, 4000: Verfahren
- 2000, 5000: System

## Patentansprüche

1. Verfahren (3000, 4000) zur Planung und Steuerung von Wartungs- und Instandsetzungsarbeiten an einem Fahrzeug eines Verkehrssystems mit einem Netzwerk umfassend folgende Netzwerkkomponenten:
- wenigstens ein Fahrzeug (202),
- ein dem wenigstens einen Fahrzeug zugeordnetes, insbesondere elektronisches vernetzbares, Bordbuch (202E, 549),
- Zubehör (203, 204, 541, 543, 546), insbesondere mit einer Wartungsstandortzuordnung
- wenigstens ein erstes dem Zubehör zugeordnetes Endgerät (203E, 204E, 542,544,547),
- wenigstens ein zweites dem Zubehör zugeordnetes Endgerät (203E, 204E, 542,544,547),
umfassend die Schritte:
a) Senden von Zubehörbedarf definierenden Daten von dem Bordbuch (202E, 549) in das Netzwerk,
a) Empfangen der Daten an dem ersten und dem zweiten Endgerät (203E, 204E, 542, 544, 547),
b) bidirektionale Kommunikation der Netzwerkkomponenten untereinander,
c) Zuweisung der Wartungs- und Instandsetzungsarbeiten,
d) Rückmeldung nach Durchführung der Wartungs- und Instandsetzungsarbeiten,
wobei die Zuweisung und die Rückmeldung durch wenigstens eine der Netzwerkkomponenten durchgeführt werden.

2. Verfahren nach Anspruch 1, **dadurch gekennzeichnet, dass** das Netzwerk des Verkehrssystems ein an einem Bauteil des wenigstens einen Fahrzeugs vorgesehenes Endgerät (203E, 204E, 542, 544, 547) aufweist und das Endgerät (203E, 204E, 542, 544, 547) ausgebildet ist, Zubehörbedarf definierende Daten in das Netzwerk zu senden.

3. Verfahren nach einem der Ansprüche 1 oder 2, **dadurch gekennzeichnet, dass** das Netzwerk wenigstens ein drittes dem Zubehör zugeordnetes Endgerät (203E, 204E, 542, 544, 547) aufweist, das insbesondere einem Wartungsausführenden, insbesondere einem Arbeiter, zugeordnet ist.

4. Verfahren nach einem der vorstehenden Ansprüche, **dadurch gekennzeichnet, dass** eine bidirektionale Kommunikation eine Verhandlung der Netzwerkkomponenten untereinander umfasst und weiter umfassend den Schritt:
c') Alertmanagement, wenn die bidirektionalen Verhandlungen nicht erfolgreich sind.

5. Verfahren nach einem der vorstehenden Ansprüche, **dadurch gekennzeichnet, dass** die Schritte a) bis e), insbesondere umfassend Schritt c'), über eine Kommu-nikationsschnittstelle erfolgt, insbesondere die Schritte sequentiell, vorzugsweise in einer Schleife ausgeführt werden.

6. Verfahren nach einem der vorstehenden Ansprüche, **dadurch gekennzeichnet, dass** die den Zubehörbedarf definierenden Daten in das an dem Fahrzeug vorgesehene Bordbuch (202E, 549) aus Aufgabenplänen, insbesondere Wartung- und Instandsetzungsplänen, und/oder Überwachungssensoren zur Überwachung von Bauteilen des wenigstens einen Fahrzeugs transformiert werden.

7. Verfahren nach einem der vorstehenden Ansprüche, **dadurch gekennzeichnet, dass** die den Zubehörbedarf definierenden Daten von einem Zentralsystem (510) zum Darstellen der Daten, zum Eskalationsmanagement (514) und/oder zur Kapazitäts- und Einsatzplanung (511) empfangen werden.

8. Verfahren nach einem der vorstehenden Ansprüche, **dadurch gekennzeichnet, dass** das wenigstens eine erste und zweite Endgerät (203E, 204E, 542, 544, 547) Messdaten erhebt und damit seine Position selbst bestimmt.

9. Computerprogrammprodukt zur Planung und Steuerung von Wartungs- und Instandsetzungsarbeiten für Verkehrssysteme mit einem Netzwerk umfassend folgende Netzwerkkomponenten:
- wenigstens ein Fahrzeug,
- ein dem wenigstens einen Fahrzeug (202) zugeordnetes Bordbuch (202E, 549),
- Zubehör, insbesondere mit einer Wartungsstandortzuordnung,
- wenigstens ein erstes dem Zubehör zugeordnetes Endgerät (203E, 204E, 542,544,547),
- wenigstens ein zweites dem Zubehör zugeordnetes Endgerät (203E, 204E, 542,544,547),
wobei das Computerprogrammprodukt ausgebildet ist, zum Laden in eine Speichereinheit wenigstens einer Netzwerkkomponente und Softwarecodeabschnitte aufweist,
mittels denen das Computerprogrammprodukt beim Laufen auf einer Prozessoreinheit der Netzwerkkomponente ausgebildet ist, die Schritte des Verfahrens nach einem der vorstehenden Ansprüche auszuführen.

10. Digitales Speichermedium, insbesondere elektronisches, optisches und/oder magnetisches Speichermedium, mit elektronisch auslesbaren Computerimplementierten Anweisungen, die so mit einem programmierbaren Computersystem zusammenwirken können, dass ein Verfahren nach einem der Ansprüche 1 bis 8 ausgeführt wird.

11. Endgerät (203E, 204E, 542, 544, 547), ausgebildet zum Anbringen an Zubehör eines Verkehrssystems mit einem Netzwerk, wobei das Endgerät (203E, 204E, 542, 544, 547) als Netzwerkkomponente des Netzwerkes vorgesehen ist, umfassend:
- einen Eingangskanal zum Empfangen von Informationen,
- einen Ausgangskanal zum Übermitteln eines Steuersignals,
- eine Speichereinheit zum Speichern der Informationen,
- eine Prozessoreinheit zum Verarbeiten eines Computerprogrammprodukts gemäß Anspruch 9, und
- ein Kommunikationsprotokoll zum Definieren der Syntax, der Semantik und/oder der Synchronisation der Kommunikation mit weiteren Netzwerkkomponenten,
wobei das Endgerät (203E, 204E, 542, 544, 547) zur bidirektionalen Kommunikation mit den weiteren Netzwerkkomponenten ausgebildet ist.

12. Endgerät (203E, 204E, 542, 544, 547) nach Anspruch 11, umfassend einen hochminiaturisierten Computer und/oder ein RFID-System.

13. System (2000, 5000) zur Planung und Steuerung von Wartungs- und Instandsetzungsarbeiten an einem Fahrzeug eines Verkehrssystems mit einem Netzwerk, umfassend:
- ein Zentralsystem (510) zur Darstellen der Daten, zum Eskalationsmanagement (514) und/oder zur Kapazitäts- und Einsatzplanung (511),
- Netzwerkkomponenten des Netzwerkes des Verkehrssystems, umfassend:
- wenigstens ein Fahrzeug (202),
- ein dem wenigstens einen Fahrzeug zugeordnetes Bordbuch (202E, 549),
- Zubehör,
- wenigstens ein erstes an dem Zubehör vorgesehenes Endgerät (203E, 204E, 542, 544, 547),
- wenigstens ein zweites an dem Zubehör vorgesehenes Endgerät (203E, 204E, 542, 544, 547),
- eine Kommunikationsschnittstelle zum Austausch von Daten wenigstens zwischen dem Zentralsystem und den Netzwerkkomponenten,
wobei wenigstens eine der Netzwerkkomponenten ausgebildet ist zur Zuweisung der Wartungs- und Instandsetzungsarbeiten und die Rückmeldung nach dem Durchführen der Wartungs- und Instandsetzungsarbeiten.

14. System zur Planung und Steuerung von Wartungs- und Instandsetzungsarbeiten gemäß Anspruch 13, **dadurch gekennzeichnet, dass** wenigstens das erste und zweite Endgerät (203E, 204E, 542, 544, 547) ausgebildet sind, um miteinander über die Kommunikationsschnittstelle zu kommunizieren.

15. System zur Planung und Steuerung von Wartungs- und Instandsetzungsarbeiten gemäß Anspruch 13 oder 14, **dadurch gekennzeichnet, dass** die Netzwerkkomponenten des Netzwerkes des Verkehrssystems weiter umfassen:
- wenigstens einen definierten Wartungsstandort mit zertifiziertem Wartungsumfang und/oder Wartungskapazität; und/oder
- einem Wartungsausführenden mit vorbestimmter Wartungsqualifikation und/oder Wartungskapazität, insbesondere mit Wartungsstandortzuordnung.

16. System nach einem der Ansprüche 12 bis 15, **dadurch gekennzeichnet, dass** das Zubehör (203, 204, 541, 546) ein Werkzeug, ein Transportträger, ein Ersatzteil und/oder ein Wartungsausführender, insbesondere Arbeiter, ist.

17. System nach einem der Ansprüche 12 bis 16, **dadurch gekennzeichnet, dass** das erste Endgerät (204E, 544) einem Werkzeug (203, 543) und/oder ein weiteres erstes Endgerät (544) einem Transportträger (543) zugeordnet ist und/oder das zweite Endgerät (547) einem Ersatzteil (546) zugeordnet ist und/oder ein drittes Endgerät (203E, 542) einem Wartungsausführenden (203, 541), insbesondere einem Arbeiter, zugeordnet ist.

18. Kommunikationsschnittstelle zum Austausch von Daten zwischen einem an einem Fahrzeug (202) vorgesehenen Bordbuch (202E, 549) und wenigstens einem Endgerät (203E, 204E, 542, 544, 547) vorbereitet zur Verwendung in einem System (2000, 5000) nach einem der Ansprüche 13 bis 17 und/oder in einem Verfahren (3000, 4000) nach einem der Ansprüche 1 bis 8.
